# EUROPÄISCHE PATENTANMELDUNG

(11) **EP 1 459 937 A2**
(43) Veröffentlichungstag der Anmeldung: **22.09.2004**
(21) Anmeldenummer: 04006476.8
(22) Anmeldetag: 18.03.2004
(51) Int. Cl.: B60R 11/02

(54) **Ersatzradgehäuse mit Basslautsprechergehäuse**

(30) Priorität: 20.03.2003 DE 10302180
(71) Anmelder: Josch, Günter, 49774 Lähden (DE)
(72) Erfinder: Josch, Günter, 49774 Lähden (DE)

(57) **Zusammenfassung**

Ersatzradgehäuse (10) mit einem Basslautsprecher-gehäuse (1) zum Einbau in den Kofferraum (3) eines Personenkraftfahrzeuges, wobei in der Felgenmulde (10) des Ersatzrades das Bassgehäuse eingebaut wird und somit die gesamte Ladefläche des Kofferraumes erhalten bleibt.

## Beschreibung

Die Erfindung bezieht sich auf ein Bassgehäuse, mit einem Radgehäuse, zum einbau im Kofferraum eines Kraftfahrzeuges,genauer, das Radgehäuse wird in der Felgenmulde des Reserverades eingebaut.

Es gibt verschiedene Anmeldungen, zum Beispiel,

DE 196 120 80 A1, ist ein Lautsprecher mitCassis im Gehäuse eingebaut. DE 199 38 172 C2, isteine Lautsprecherbox in einem Gehäuse, in den Kopfstützen eingebaut.

DE 360 80 48 C2, ist ein Lautsprecherflachgehäuse zum Einbau unter den Vordersitzen. DE 199 19 456 A1 ist eine Bassreflexbox, eingebaut im Stirnbereich eines Kraftfahrzeuges,

Der Erfindung, Bassgehäuse mit einem Radgehäuse, liegt das technische Problem zugrunde, eine Bassbox in Kraftfahzeuge zu installieren, indem ein platzsparender Raum gesucht wird. Die Bassbox wird hier in der Felgenmulde des Reserverades eingebaut.

In der Version, ist das kleine Radgehäuse und Hauptgehäuse undiDDeckplatte eingebaut.

Großes Radgehäuse und Hauptgehäuse und Deckplatte, hier wird das Ersatzrad entfernt. Vorteil größeres Gehäusevolumen. Großes Radhehäuse und Deckplatte, Vorteil, mehr Platz im Kofferraum. Nur großes Bassgehäuse, kann in dieser Form auch für Kombifahrzeuge eingesetzt werden. Das Prinzip ist die Erhaltung des Blatzes im Kofferraum, bei gleichzeitiger Wiedergabe tiefster Freyuenzen.

Der Zusammenbau des Bassgehäuses findet von unten nach oben statt.

Die Erfindung wird nachfolgend anhand der Zeichnungen näher erläutert.

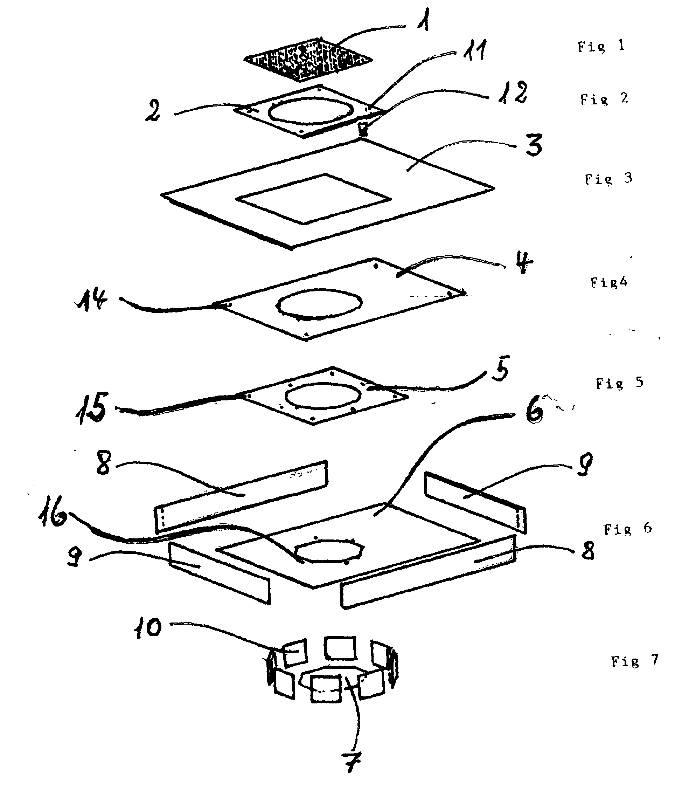

Figur 7, die Platten 10 werden miteinander verleimt und nachfolgend mit der Grundplatte 7 verleimt.

Figur 6, hier werden die vier Platten 8 und 9 verleimt. In das entstadene Viereck, wird die Grundplatte 6 verleimt. Nachdem wird das Radgehäuse 7 und 10, unterhalb der achteckigen Öffnung des Hauptgehäuses 6 und 8 und 9 verleimt. Mit vier Schrauben 16 in vorgeborten Löchern werden beide Gehäuse fixiert. In Figur 3, wird die Gehäusedeckplatte, in Figur 4 die Lautsprecher-Einlaßplatte 4, in Figur 5 die Platte- Schallwandöffnung 5, ausgerichtet, verleimt und mit vier Schrauben 14 fixiert. Figur 1, wird das Lochblech 1, in die Lautsprecher-Abdeckung 2 verklebt und mit vier Schrauben 11 fixiert. Die Öffnungsschlaufe 12, wird an der seitlichen Aussparung mit einer Schraube befestigt.

Die vierteilige Deckplatte 2, 3 4 und 5, wird dann mit der Gehäuse- Baugruppe 6,7,8,9 und 10 verleimt.

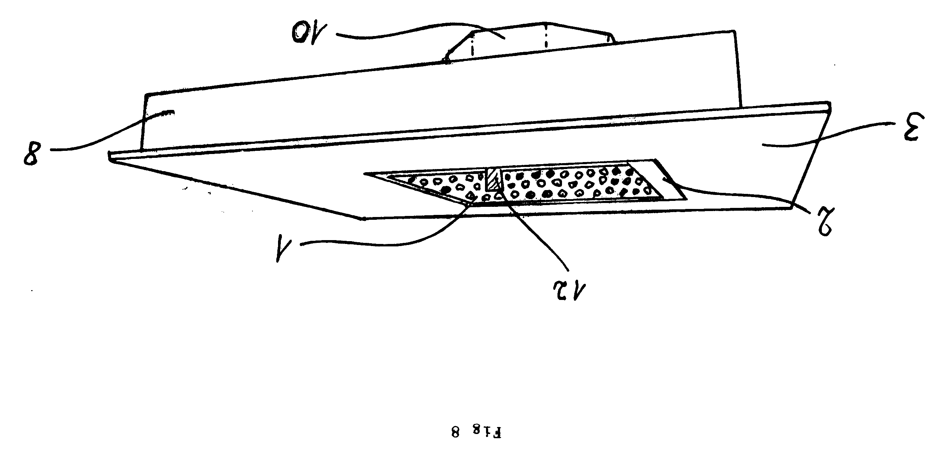

Figur 8 zeigt eine Seitenansicht des zusammengebauten Bassgehäuses,mit dem Lochblech 1, der Lautsprecherabdeck ung 2, der Gehäusedeckplatte 3, lange Seite Hauptgehäuse 8, Seitenteile Radgehäuse 10, welches in die Felgenmulde im Reserverad eingebaut wird.

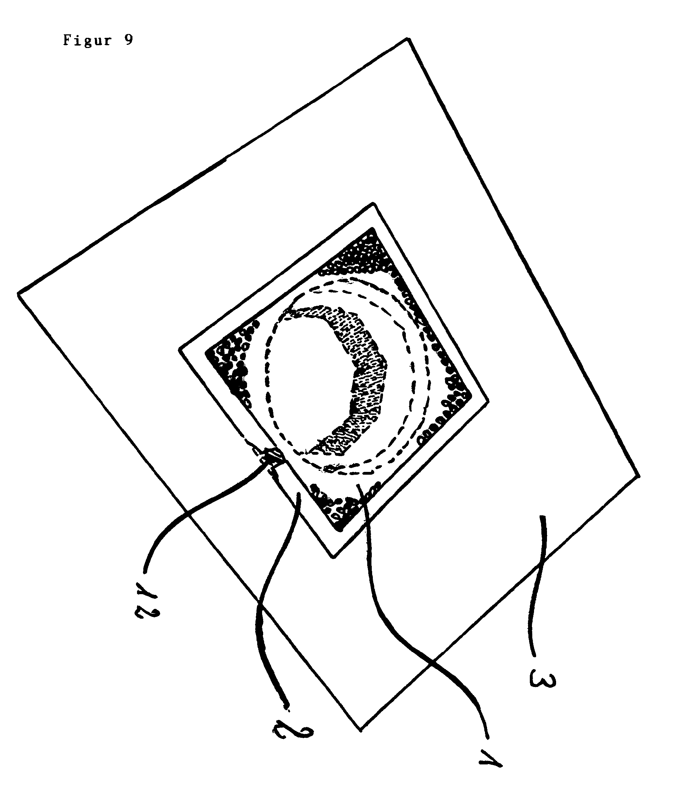

Figur 9 zeigt eine Draufsichtauf das Bassgehäuse, mit dem Lochblech 1, der Lautsprecherabdeckung 2, der Gehäusedeckplatte 3,und der Öffnungsschlaufe 12.

## Patentansprüche

1. Bassgehäuse mit einem Radgehäuse 7 und 10, zum Einbau im Kofferraum eines Personenkraftfahrzeuges, dadurch gekennzeichnet, daß das Radgehäuse in der Felgenmulde des Reserverades eingebaut wird, somit entsteht eine, nur um wenige Zentimeter erhöhte Ebene durch den Einbau des Bassgehäuses.

2. Bassgehäuse nach Anspruch 1, **dadurch gekennzeichnet, daß** das Radgehäuse mit den Gehrungsflächen (22,5°) geleimt wird, in das entstandene Achteck mit Falz, wird die Grundplatte 7 verleimt.

3. Bassgehäuse, nach Anspruch 1 und 2, **gekennzeichnet durch**, 4 Platten 8 und 9, die mit den Gehrungsflächen (45°) aneinandergeleimt werden. In die Falz des entstandenen Vierecks, wird die Grundplatte 6 verleimt.

4. Bassgehäuse, nach einem der vorangegangenen Ansprüche, **dadurch gekennzeichnet, daß** das Radgehäuse 7 und 10, unterhalb der achteckigen Öffnung des HauptGehäuses 6,8 und 9 verleimt wird. Mit vier Schrauben 16, in vorgeborten Löchern, werden beide Gehäuse fixiert.

5. Bassgehäuse, nach einem der vorangegangenen Ansprüche, **dadurch gekennzeichnet, daß** die gehäusedeckplatte 3, mit Stoff bezogen und verklebt wird. Ebenfalls wird die Lautsprecher-Einlaßplatte 4, mit Stoff bezogen.

6. Bassgehäuse, nach einem der Vorangegangenen Ansprüche, **dadurch gekennzeichnet,daß** die Gehäusedeckplatte 3, lautsprechereinlaßplatte 4 und die Schallwandöff nung 5, vor dem Verleimen exakt ausgerichtet werden. Das heiheißt, sämtliche Öffnungen liegen zentrisch und die Kanten parallel zueinander. Lautsprecher-Einlaßplatte 4, unter Gehäusedeckplatte 3 und mit vier Schrauben 14 fixieren. Platte- Schallwandöffnung - 5, unter Lautsprecher-Einlaßplatte 4 und mit acht Schrauben 15, fixieren.

7. Bassgehäuse, nach einem der Vorangegangenen Ansprüche, dadurch gekennzeinet, daß das Lochblech 1 in die Ausfräsung der Lautsprecher- Abdeckung 2, verklebt wird und mit vier Schrauben 11, fixiert wird. die Öffnungsschlaufe 12, wird mit einer Schraube an der seitlichen aussparung befestigt. Zuletzt wird die vierteiligeDeckplatte 2,3,4 und 5 mit der Gehäuse- Baugrupp e 6,7,8,9, und 10 verleimt.
